# EUROPEAN PATENT SPECIFICATION

(11) **EP 3 505 706 B1**
(45) Date of publication and mention of the grant of the patent: **21.04.2021**
(21) Application number: 18211959.4
(22) Date of filing: 12.12.2018
(51) Int. Cl.: E04G 9/06, B29C 70/68, B29C 70/28, E02D 27/08, E04C 5/06, E04G 13/00

(54) **METHOD FOR MANUFACTURING A FOOTING MOULD ELEMENT**
VERFAHREN ZUR HERSTELLUNG EINES GRÜNDUNGSFORMELEMENTS
PROCÉDÉ DE FABRICATION D'UN ÉLÉMENT DE MOULAGE À SOCLE

(30) Priority: 28.12.2017 FI 20176179
(43) Date of publication of application: 03.07.2019
(73) Proprietor: Beotek Oy, 05800 Hyvinkää (FI)
(72) Inventor: JOKINEN, Reijo, 05800 Hyvinkää (FI)
(74) Representative: LEITZINGER OY

(56) References cited:
- EP-A1- 2 962 837
- EP-A2- 1 837 164
- AU-B2- 631 988
- DE-A1- 3 142 148
- DE-U1- 29 700 133

## Description

The invention relates to a method for manufacturing a footing mould element, which can be used as a footing casting mould for buildings, the footing mould element including a sparse steel bar mesh manufactured from steel bars, which are attached to each other at their intersection points, the method including the following steps:
(i) a planar steel bar mesh is formed by bending steel bars into an elongated trough having a bottom, side walls and, between these, legs, which are formed by bending the steel bars of the steel bar mesh, the bending being performed by a bending apparatus having first press elements (21) and second press elements (22), and
(ii) onto the opposite sides of the side walls, plastic membranes retaining the concrete cast are attached by laminating the plastic membranes onto each other by blowing hot air in the area of the openings of the steel bar mesh.

From EP 2962837 A1 and EP 1837164 A2 is known such a method, in which the plastic membranes are attached after the steel bar mesh is bent into its final form into an elongated trough. The disadvantage of this known method is that storage and transportation of the footing mould elements requires a great deal of space. Especially with longer transportation distances, transportation becomes a big expense, because transportation space is limited.

From DE 202007008977 U1 is known a footing mould element having several separate steel bar meshes attached to each other by hinge joints. In this case, the mould elements can be transported as planar to usage sites. Thus, transportation expenses can be reduced. As the disadvantage in this known method is that the hinge joints between the walls and the bottom do not support the walls in the upright position, wherein the walls must be supported separately. Further, between the walls and the bottom are not formed legs, which keep the bottom off the ground in order that the concrete cast will settle around the steel bars of the bottom.

AU 631988 B2 discloses a method of producing a mould component having an open base and side walls which have been provided by strips of shape retaining material before bending the crossbars such that they define the shape of the mould components. Also in this case, the mould elements can be transported in a planar state to usage sites and the transportation expenses can be reduced. As disadvantages in this known method are in that the shape retaining material of the walls is expensive and between the walls and the bottom are not formed legs, which keep the bottom off the ground in order that the concrete cast will settle around the steel bars of the bottom.

The object of the invention is to obviate above-said disadvantages and provide a method, using which storage and transportation expenses can be substantially reduced while also utilizing a footing mould element, the walls of which are connected to the bottom via the legs formed from stiffly bent steel bars.

This object is achieved such that said laminating step (ii) is performed onto the edge areas of the planar steel bar mesh before the bending step (i) of the steel bar mesh, as is more precisely defined in the characterizing part of the accompanying claim 1.

In this case, the planar mould blanks can be stacked a large amount on top of each other into a small space. The mould blanks can be stored and transported in a given volume in an amount many times greater than in the past.

In a bending step (i) according to the invention, the first leg arch between the bottom and the leg is bent first, and then the second leg arch is bent, which forms the bottom of the leg.

When the bending of the leg arches is performed in said order, the plastic membranes can also be extended onto the area of the legs and, if desired, even onto the area extending below the legs, without the plastic membranes limiting the function of the press elements or the press elements breaking the plastic membranes. This object is achieved by a method according to claim 1.

The dependent claims present preferred embodiments of the invention.

In the following, the invention is illustrated in more detail by means of the accompanying drawings, in which:
- Fig. 1: shows schematically the bending steps of a method according to the invention (for the sake of the clarity of the drawing, the plastic membranes laminated to the walls are not shown in the area of the lower part of the wall and the leg arch);
- Fig. 2: shows schematically the step of laminating the plastic membranes on both sides of the edge areas of the planar steel bar mesh; and
- Fig. 3: shows the pulling of a plastic membrane web 11 from the roll 10 for the lamination according to Fig. 2.

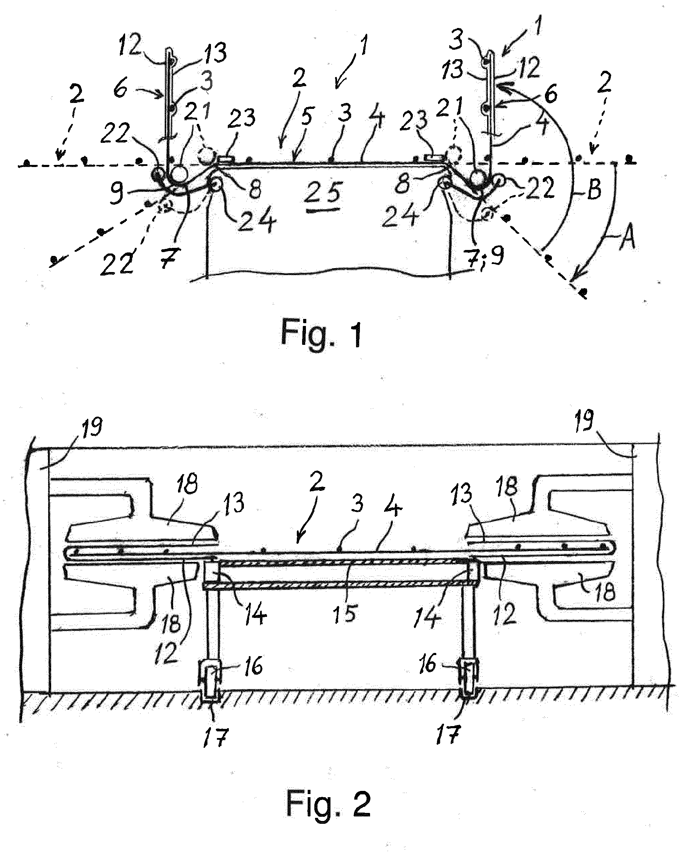

Fig. 1 shows a footing mould element 1 manufactured by a method according to the invention, which includes a steel bar mesh 2 bent to form a trough and plastic membranes 12, 13 laminated to the side walls 6 of the trough and retaining a concrete mass cast into the trough. In Fig. 1, for the sake of the clarity of the figure, the plastic membranes 12, 13 are shown on only a part of the wall, although they extend to the lower part of the wall and, preferably, under the leg and over the leg arch 9. The plastic membranes 12, 13 are drawn as separate, although, in practise, they are attached to each other in the area of the openings of the steel bar mesh 2, and, at the steel bars, they are attached to the steel bars 4, 3. The trough, and thus also the footing mould element 1, has a bottom 5, side walls 6 and, between these, legs 7, which are formed by bending the transverse steel bars 4 of the steel bar mesh 2. The legs 7 serve to raise the bottom 5 adequately up from the ground, so that the steel bars 3, 4 of the bottom remain as concrete reinforcement inside a concrete mass cast into the trough-like mould. For this reason, the area of the bottom 5 between the legs 7 is free from the plastic membranes. In other words, in the laminating step, the area of the bottom 5 is left without plastic membranes. The height of the legs 7 is 5 - 10 cm, typically 6 - 8 cm.

The sparse steel bar mesh 2 is manufactured from transverse steel bars 4 and longitudinal steel bars 3. The distance between the transverse steel bars 4 is, for example, 20 cm and the distance between the longitudinal steel bars 3 is, for example, 18 cm in the area of the trough bottom and, for example, 10 cm in the area of the walls. The steel bars 3, 4 are attached to each other at their intersection points by welding. A method according to the invention uses pre-made planar steel bar meshes 2, which are manufactured for the construction industry as concrete reinforcement.

In Fig. 1, a dashed line is used to illustrate the different bending steps of the planar steel bar mesh 2. Before the bending steps is, however, performed the laminating step shown in Fig. 2, in which the plastic membranes 12, 13 are laminated onto the edge areas of the planar steel bar mesh 2, as is later described in greater detail. By bending the transverse steel bars 4, the first leg arch 8 (arrow A) between the bottom 5 and the leg 7 is bent first, and then the second leg arch 9 (arrow B) is bent, which forms the bottom of the leg 7.

The first leg arch 8 is bent by the first press elements 21, which form in the end position of their bending movement the bending die for the second leg arch 9. The corner of the bending table 25 serves as the bending die for the first leg arch 8. On the top of the bending table 25 are holder elements 23, which prevent the bottom 5 from arching upwards during the bending of the leg arch 8. The press elements 21 can be moved either linearly on the cylinder or on the rotation axis 24 via the shaft.

The second leg arch 9 is bent by the second press elements 22, which are moved along a curved track. The press elements 22 are attached by a curved shaft to the rotation axis 24, by the turning of which the press elements 22 are moved. If both press elements 21 and 22 are moved on the axis 24 in the bending table, it can be implemented using two coaxial axes or two parallel axes.

When the steel bar mesh 2 is disposed onto the bending table 25, the transverse steel bars 4 are first disposed next to the press elements 21 and the holder elements 23, and then the steel bar mesh 2 is moved in its longitudinal direction (in the perpendicular direction to the plane of the drawing) such that the transverse steel bars 4 settle under the press elements 21 and the holder elements 23. The press elements 21 and 22 may be rollers or pins, which are located at each transverse steel bar 4 along the entire length of the steel bar mesh 2. However, the press elements 21 have a common drive, just as the press elements 22 have a common drive, such as the axis 24. The turning axis 24 of the press elements 22 can alternatively be located co-axially with the press elements 21 at their end positions.

In a preferred embodiment of the invention, at least a part of the second leg arch 9 is formed onto the area, in which the plastic membranes 12, 13 are laminated together, wherein the plastic membranes extend in the finished footing mould element below the leg 7. The presented bending order (first A and then B) is preferred in order that the press elements 21 and 22 do not damage the plastic membranes. In the opposite bending order, the starting position of the press elements 21 would prevent the lower edge of the plastic membranes 12, 13 from extending below the leg 7. In the presented bending order, the press element 21 is able to move from the area without plastic onto the plastic membranes to serve as a bending die for the leg arch 9.

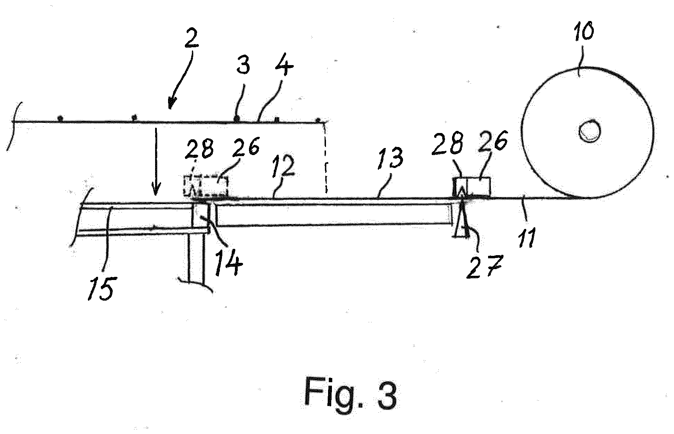

Fig. 3 shows the pulling and disposition into the lamination position of the plastic membrane web 11. The plastic membrane web 11 is pulled from the roll 10 by the suction beam 26, and the edge of the plastic membrane web is attached to the lamination table 15 by the suction of the suction beam 14 in the lamination table 15. The planar steel bar mesh (2) is disposed on top of the plastic membrane web 11, 12 such that they are one on top of the other for a distance corresponding to at least the height of the side wall 6 of the finished footing mould element. The plastic membrane web 11 is cut at said distance from the edge of the steel bar mesh 2, and the other half 13 of the cut plastic membrane is turned over the planar steel bar mesh 2. The stopper 28 of the cutting blade 27 may be attached to the suction beam 26 that pulls the plastic membrane web 11. While the suction beam 26 hands over the edge of the plastic membrane to the suction beam 14, it can simultaneously press the plastic membrane through the suction tubes rising from the suction beam 14. These suction tubes draw a vacuum between the plastic membranes 12, 13, which facilitates the following laminating step with the hot air blowing. Vacuum can be drawn between the plastic membranes 12, 13 also from the ends of the plastic membranes, when the gap between the skirts of the plastic membranes is closed by pressing the skirts together by the sealing strip.

Fig. 2 shows the travel of the lamination table 15 through the hot air blowing device. The edge areas of the planar steel bar mesh 2, which are equipped with a two-sided plastic membrane 12, 13, travel between the hot air blowing nozzles 18. By means of the suction tubes extending from the suction beam 14, or by suction drawn from the ends, the plastic membranes 12, 13 are drawn by vacuum tightly together during the hot air blowing, whereby the lamination will be tight and neat (without wrinkles). If suction tubes extending to between the skirts of the plastic membranes are used, it is preferred to direct them at the transverse steel bars 4, wherein the upper plastic membrane 13 is not able block the suction tubes and the suction effect is transferred via the channels formed by the steel bar mesh to between the plastic membranes 12, 13. If suction from the end is used, it is preferred to place the suction tubes extending from the suction pipe next to the longitudinal steel bars 3. However, vacuum suction is not imperative, but instead the plastic membranes can be laminated together using only the hot air blowing.

The lamination table 15 can move on the wheels 16 along the rails 17. An exhaust fan and a transportation motor (not shown) can be attached to the lamination table 15 to move along with it. The hot air heating devices and blowers are inside the casings 19. Hot air is drawn back inside the casings 19 in order to achieve a nearly closed hot air circulation and as little heat loss as possible.

In the presented embodiments of the invention, the lamination and bending of both walls is performed simultaneously. The invention can also be implemented such that the lamination and bending is performed to only one wall at a time, and the steel bar mesh is turned in the meantime such that what was previously the front end, changes to become the rear end. In this case, however, production is more than two times slower than it was previously.

The planar steel bar meshes, onto the edge areas of which the plastic membranes 12, 13 are laminated, are stored and transported closer to desired usage areas or sites, onto which has been arranged a bending device according to Fig. 1. The bending device is to be easily transported from one place to another, i.e. close to a busier building area. Using a laminating line according to Figs. 2 and 3, it is possible to continuously manufacture laminated steel bar meshes, which can be stored in large amounts in a small space sheltered from the weather and transported to bending devices located in different places according to the demand for footing mould elements. Lamination and bending devices according to Figs. 2 and 1 may naturally also be located in the same production facility, wherein the need for temporary storage is reduced. The transfer of planar mould blanks from a storage stack to a bending device can be carried out by a manual or automatic transfer device, which assures the positioning of the mould blank into place in the bending station.

## Claims

1. A method for manufacturing a footing mould element, which footing mould element (1) can be used as a footing casting mould for buildings, the footing mould element including a sparse steel bar mesh (2) manufactured from steel bars, which steel bars (3, 4) are attached to each other at their intersection points, the method including the following steps:
(i) a planar steel bar mesh (2) is formed by bending steel bars into an elongated trough having a bottom (5), side walls (6) and, between these, legs (7), which are formed by bending the steel bars (4) of the steel bar mesh, the bending being performed by a bending apparatus having first press elements (21) and second press elements (22), and
(ii) onto the opposite sides of the side walls, plastic membranes (12, 13) retaining the concrete cast are attached by laminating the plastic membranes onto each other by blowing hot air in the area of the openings of the steel bar mesh, **characterized in that** said laminating step (ii) is performed onto the edge areas of the planar steel bar mesh (2) before the bending step (i) of the steel bar mesh, which is performed by bending the steel bars (4); that, in the laminating step, the area of the steel bar mesh forming the bottom (5) is left without plastic membranes; that, in the bending step (i), the first leg arch (8) between the bottom and the leg is bent first, and then the second leg arch (9) is bent, which forms the bottom of the leg; and that the first leg arch (8) is bent by the first press elements (21), which form in the end position of their bending movement the bending die for bending the second leg arch (9).

2. A method according to claim 1, **characterized in that** at least a part of the leg arch (9) is formed onto the area, in which the plastic membranes (12, 13) are laminated together, wherein the plastic membranes extend in the finished footing mould element below the leg (7).

3. A method according to claim 1 or 2, **characterized in that** the second leg arch (9) is bent by the second press elements (22), which are moved along a curved track.

4. A method according to claim 1, **characterized in that**, during the lamination of the plastic membranes (12, 13), a vacuum is drawn between them.

## Patentansprüche

1. Verfahren zum Herstellen eines Sockelformelements, wobei das Sockelformelement (1) als Sockelgussform für Gebäude verwendet werden kann, wobei das Sockelformelement ein dünnes Stahlstangengitter (2) beinhaltet, das aus Stahlstangen hergestellt wird, wobei die Stahlstangen (3, 4) aneinander an ihren Schnittpunkten angebracht werden, wobei das Verfahren die folgenden Schritte umfasst:
(i) ein planares Stahlstangengitter (2) wird durch Biegen von Stahlstangen in eine längliche Wanne gebildet, die einen Boden (5), Seitenwände (6) und zwischen diesen Beine (7) aufweist, die durch Biegen der Stahlstangen (4) des Stahlstangengitters geformt werden, wobei das Biegen von einem Biegegerät ausgeführt wird, das erste Presselemente (21) und zweite Presselemente (22) aufweist, und
(ii) auf den entgegengesetzten Seiten der Seitenwände werden Kunststoffmembranen (12, 13), die den Beton zurückhalten, durch Laminieren der Kunststoffmembranen aufeinander durch Blasen von Heißluft in dem Bereich der Öffnungen des Stahlstangengitters angebracht,
**dadurch gekennzeichnet, dass** der Laminierungsschritt (ii) auf die Kantenflächen des planaren Stahlstangengitters (2) vor dem Biegeschritt (i) des Stahlstangengitters ausgeführt wird, das durch Biegen der Stahlstangen (4) ausgeführt wird; dass bei dem Laminierungsschritt die Fläche des Stahlstangengitters, die den Boden (5) bildet, ohne Kunststoffmembran gelassen wird; dass bei dem Biegeschritt (i) der erste Beinbogen (8) zwischen dem Boden und dem Bein zuerst gebogen wird, und dann der zweite Beinbogen (9) gebogen wird, was den Boden des Beins bildet; und dass der erste Beinbogen (8) von den ersten Presselementen (21) gebogen wird, die in der Endposition ihrer Biegebewegung die Biegematrix für das Biegen des zweiten Beinbogens (9) bilden.

2. Verfahren nach Anspruch 1, **dadurch gekennzeichnet, dass** mindestens ein Teil des Beinbogens (9) auf der Fläche gebildet wird, in der die Kunststoffmembranen (12, 13) zusammenlaminiert sind, wobei sich die Kunststoffmembranen in das fertiggestellte Sockelformelement unter dem Bein (7) erstrecken.

3. Verfahren nach Anspruch 1 oder 2, **dadurch gekennzeichnet, dass** der zweite Beinbogen (9) von den zweiten Presselementen (22), die entlang eines gebogenen Verlaufs bewegt werden, gebogen wird.

4. Verfahren nach Anspruch 1, **dadurch gekennzeichnet, dass** während des Laminierens der Kunststoffmembranen (12, 13) ein Vakuum zwischen ihnen abgesaugt wird.

## Revendications

1. Procédé de fabrication d'un élément de moulage de base, lequel élément de moulage de base (1) peut être utilisé comme un moule de coulage de base pour les bâtiments, l'élément de moulage de base incluant une maille en barres d'acier espacées (2) fabriquée à partir de barres en acier, lesquelles barres en acier (3, 4) sont rattachées les unes aux autres à leur point d'intersection, ce procédé incluant les étapes suivantes :
(i) une maille en barres d'acier planaire (2) est formée en cintrant des barres en acier en un creux allongé doté d'un fond (5), de parois latérales (6) et, entre celles-ci, de pieds (7) qui sont formés en cintrant les barres d'acier (4) de la maille en barres d'acier, le cintrage étant réalisé par un appareil de cintrage comportant des premiers éléments de compression (21) et des seconds éléments de compression (22), et
(ii) sur les faces opposées des parois latérales, des membranes en plastique (12,13) retenant la coulée de béton fixé en laminant les membranes en plastique l'une sur l'autre en soufflant de l'air chaud dans la zone des ouvertures de la maille en barres d'acier,
**caractérisé en ce que** ladite étape de laminage (ii) est réalisée sur les zones périphériques de la maille en barres d'acier planaire (2) avant l'étape de cintrage (i) de la maille en barres d'acier, qui est réalisée en cintrant les barres d'acier (4) ; que, dans l'étape de laminage, la zone de la maille en barres d'acier formant le fond (5) est laissée sans membranes en plastique ; que, dans l'étape de cintrage (i), le premier arc de pied (8) entre le fond et le pied est cintré en premier, et que le second arc de pied (9) est ensuite cintré, ce qui forme le fond du pied ; et que le premier arc de pied (8) est cintré par les premiers éléments de compression (21) qui forment, dans la position finale de leur mouvement de cintrage, la matrice de cintrage pour le cintrage du second arc de pied (9).

2. Procédé selon la revendication 1, **caractérisé en ce qu'**au moins une partie de l'arc de pied (9) est formée sur la zone dans laquelle les membranes en plastique (12,13) sont laminées ensemble, les membranes en plastique s'étendant dans l'élément de moulage de base fini en-dessous du pied (7).

3. Procédé selon la revendication 1 ou 2, **caractérisé en ce que** le second arc de pied (9) est cintré par les seconds éléments de compression (22) qui sont déplacés le long d'une piste courbe.

4. Procédé selon la revendication 1, **caractérisé en ce que**, pendant le laminage des membranes en plastique (12,13), un vide est tiré entre elles.
